**Europäisches Patentamt**

**European Patent Office**

**Office européen des brevets**

(19)

(11) Veröffentlichungsnummer: **0 265 880**
**B1**

(12) **EUROPÄISCHE PATENTSCHRIFT**

(45) Veröffentlichungstag der Patentschrift:
**10.10.90**

(51) Int. Cl.⁵: **B65D 5/54**

(21) Anmeldenummer: **87115637.8**

(22) Anmeldetag: **24.10.87**

(54) **Faltschachtel.**

(30) Priorität: **28.10.86 DE 3636666**

(43) Veröffentlichungstag der Anmeldung:
**04.05.88 Patentblatt 88/18**

(45) Bekanntmachung des Hinweises auf die Patenterteilung:
**10.10.90 Patentblatt 90/41**

(84) Benannte Vertragsstaaten:
**AT BE CH DE FR GB IT LI LU NL SE**

(56) Entgegenhaltungen:
**WO-A-86/01177**
**CH-A- 358 030**
**DE-A- 3 340 798**

(73) Patentinhaber: **August Faller KG, Freiburger Strasse 25,
D-7808 Waldkirch(DE)**

(72) Erfinder: **Heitele,Jürgen, Erlenweg 7,
D-7808 Waldkirch(DE)**
Erfinder: **Mohrhäuser,Klaus, Gutenbergstrasse 15,
D-7808 Waldkirch(DE)**

(74) Vertreter: **Patentanwälte Kohler - Schwindling - Späth,
Hohentwielstrasse 41, D-7000 Stuttgart 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Faltschachtel mit einem die Schachtelöffnung überspannenden Deckel, der über einen ersten Falz mit einer Schachtelwand verbunden ist und an einem zweiten Falz einen Laschenabschnitt aufweist, wobei der Deckel bei original verschlossener Schachtel mit einer Originalitätslasche verbunden ist, die ihrerseits über einen Falz mit einer gegegenüberliegenden Schachtelwand verbunden ist, wobei die Originalitätslasche beim erstmaligen Öffnen der Faltschachtel entlang einer Perforation von der unteren Schachtelwand abgetrennt wird.

Bei einer durch die FR-A 1 514 374 bekanntgewordenen Faltschachtel weist die Einstecklasche an ihrer äußeren Fläche eine Klebemasse auf, die nach dem Einstecken der Einstecklasche in den Schachtelkörper mit der Innenfläche der benachbarten Wand in Kontakt kommt und eine feste Klebeverbindung herstellt.

Beim ersten Öffnen dieser Schachtel wird entweder der Karton beschädigt oder aber der betreffende Kartonabschnitt wird ausgerissen. Zwar kann ein unbefugtes Öffnen der Originalpackung an der Beschädigung des Kartons oder dem ausgerissenen Abschnitt nachträglich festgestellt werden, das Ankleben der Einstecklasche an der Innenseite der Schachtelwand ist jedoch bei gefüllter Schachtel nur schwierig durchzuführen.

Die CH-A 358 030 zeigt eine Faltschachtel, deren Deckel über Einsteckzungen gegen ein unzeitiges Öffnen gesichert werden kann. Bei der dort wiedergegebenen Faltschachtel ist der Laschenabschnitt des Deckels in die Schachtelöffnung eingesteckt und der Deckel der Schachtel über einen Sicherungslappen gegen ein unzeitiges Öffnen gesichert. Der Sicherungslappen ist über einen Schlitz derart mit dem Deckel verbunden, daß der Lappen an der Innenseite des Deckels anliegt. Zwar wäre auch eine andere Verbindung denkbar, bei der der Lappen den Schlitz derart durchgreift, daß er an der Außenseite des Deckels anliegt, jedoch vermittelt eine derartige Verbindung dem Deckel keinen Halt gegen ein unzeitiges Öffnen. Ferner ist der Sicherungslappen als einfache Einstecklasche ausgebildet, die lösbar mit dem Deckel verbunden ist und nach einem erstmaligen Öffnen des Deckels mit diesem jederzeit wieder verbunden werden kann.

Eine unlösbare Verbindung des Sicherungslappens mit dem Deckel ist nicht ohne weiteres möglich. Außerdem ist der original verschlossene Zustand nicht erkennbar, da der lösbare Sicherungslappen nach einem Öffnen, wie bereits oben ausgeführt, jederzeit wieder mit dem Deckel verbunden werden kann. Außerdem ist die Schachtel bereits vor einem erstmaligen Öffnen über den Laschenabschnitt des Deckels, der in die Schachtelöffnung eingeschoben werden kann, verschließbar, so daß ein in die Schachtelöffnung eingeschobener Laschenabschnitt kein Anzeichen dafür ist, daß die Schachtel bereits einmal geöffnet worden ist.

Eine Faltschachtel der eingangs genannten Art ist z. B. aus der DE-A 3 340 798 bekannt und besitzt an ihrem Deckel ein im wesentlichen dreieckförmiges Fenster, welches durch zwei Flügel verschlossen ist. Außerdem ist an der Seitenwand, die der den Deckel aufweisenden Seitenwand gegenüberliegt, eine ebenfalls im wesentlichen dreieckförmige Zunge ausgebildet, die bei verschlossenem Deckel, d.h. bei in den Schachtelkörper eingeschobenem Laschenabschnitt, in das am Deckel vorgesehene Fenster einsetzbar ist. Durch Niederdrücken der Zunge in Richtung des Fensters werden die beiden Flügel, die durch einen Schlitz voneinander getrennt sind, in das Schachtelinnere gedrückt und geben die Fensteröffnung frei, so daß die Zunge in das Schachtelinnere eintreten kann. Unmittelbar nachdem die Zunge die beiden Flügel passiert hat, schwenken die beiden Flügel in ihre Ausgangslage zurück und verschließen die Fensteröffnung.

Dadurch wird die Zunge sicher hinter dem Fenster gehalten, wodurch ein Öffnen der Schachtel ohne ein Abreißen der Zunge von ihrer Schachtelwand kaum möglich ist. Beim ersten Öffnen der Schachtel wird also die Zunge von ihrer Schachtelwand abgerissen, und hängt nunmehr mit ihrem im wesentlichen dreieckförmigen Teil an der Innenseite des Fensters, wobei der andere Teil der Zunge, der im wesentlichen halbkreisförmig ausgebildet ist, und einen Teil der Schachtelwand darstellt, an der Außenseite des Fensters hängt.

Zwar kann diese bekannte Schachtel nach dem erstmaligen Öffnen wieder verschlossen werden, jedoch wirkt sich der an der Außenseite des Deckels sich befindende Teil der abgerissenen Zunge als störend aus. Außerdem kann durch geschickte Manipulation, das heißt durch vorsichtiges Einfügen des aus der Seitenwand ausgerissenen Teils eine original verschlossene Schachtel vorgetäuscht werden, so daß nicht sofort erkennbar ist, ob die Schachtel; noch original verschlossen oder bereits einmal geöffnet worden ist. Es ist also nicht ohne weiteres erkennbar, ob die Schachtel noch original verschlossen ist. Dies ist insbesondere dann der Fall, wenn die Schachtel auf der Schachtelwand aufliegt, aus der der mit der Zunge verbundene Teil ausgerissen worden ist. Außerdem kann durch geschickte Manipulation die durch das Fenster eingesteckte Zunge hinter den Flügeln hervorgeholt und dadurch der Originalitätsverschluß geöffnet werden, ohne daß die Zunge von der Schachtelwand abgerissen wird. Wird die Zunge nach einem derartigen Öffnen wieder wie oben beschrieben in das Fenster eingesteckt, so läßt der Verschluß nicht erkennen, daß er bereits einmal geöffnet worden ist.

Der Erfindung liegt daher die Aufgabe zugrunde, eine Faltschachtel bereitzustellen, die ein erstmaliges Öffnen leicht zu erkennen gibt und der Originalitätsverschluß außerdem einfach herzustellen ist.

Diese Aufgabe wird gemäß der Erfindung dadurch gelöst, daß die Originalitätslasche unlösbar mit dem Deckel verbunden ist, daß bei original verschlossener Schachtel der Laschenabschnitt vom Schachtelkörper absteht, und daß der Laschenabschnitt erst nach dem erstmaligen Öffnen der Faltschachtel in die Schachtelöffnung einsteckbar und dadurch die Schachtel erstmalig über den Laschenabschnitt verschließbar ist.

Durch die unlösbare Verbindung der Originalitätslasche mit dem Deckel wird sichergestellt, daß die Schachtel nicht, auch nicht durch geschickte Manipulation geöffnet werden kann, ohne daß die Verbindung aufgebrochen wird. Durch das Abstehen des Laschenabschnitts vom Schachtelkörper wird sichergestellt, daß bereits von weitem erkennbar ist, daß die Schachtel noch original verschlossen ist. Durch das weitere Merkmal, daß der Laschenabschnitt erst nach dem erstmaligen Öffnen der Faltschachtel in die Schachtelöffnung einsteckbar und dadurch die Schachtel erstmalig über den Laschenabschnitt verschließbar ist, signalisiert die erfindungsgemäß ausgebildete Schachtel bei einem eingesteckten Laschenabschnitt einem Benutzer, daß sie bereits einmal geöffnet worden ist. Befindet sich der Laschenabschnitt außerhalb der Schachtelöffnung, so ist die Schachtel, falls sie bereits einmal geöffnet worden ist, nicht verschlossen, oder sie ist original verschlossen, da beim Originalitätsverschluß der Laschenabschnitt nicht in der Schachtelöffnung steckt. Sollte die Schachtel bereits einmal geöffnet worden sein, und ist der Laschenabschnitt zur Vortäuschung einer original verschlossenen Schachtel nicht in die Schachtelöffnung eingesteckt, so ist trotzdem sofort erkennbar, daß die Schachtel bereits einmal geöffnet worden ist, da die beiden seitlichen Laschen aufgrund ihrer Vorspannung den Deckel von der Schachtelöffnung wenigstens teilweise abheben.

Die erfindungsgemäße Schachtel signalisiert demnach einem Benutzer sofort, ob sie noch original verschlossen ist oder ob sie bereits einmal geöffnet worden ist. Außerdem kann der Originalitätsverschluß der erfindungsgemäßen Faltschachtel nicht manipuliert werden. Des weiteren ist der Originalitätsverschluß einfach herzustellen und bietet eine hohe Sicherheit gegen unbefugtes Öffnen.

Die Erfindung hat den Vorteil, daß der mit dem Seitenteil über eine Biegelinie oder Biegekante verbundene Laschenabschnitt auf einfache Weise durch ein Maschinenwerkzeug in eine Stellung parallel zur Originalitätslasche gebogen werden kann, und daß in dieser Stellung der beiden Teile diese auf sehr einfache Weise maschinell miteinander untrennbar verbunden werden können, beispielsweise können diese beiden Teile durch eine Heftung miteinander verbunden werden oder aber, wenn zuvor entweder auf die Originalitätslasche oder auf den Laschenabschnitt oder auf beide Teile ein Klebstoff aufgebracht wird, diese beiden Teile auch bei gefüllter Faltschachtel gegeneinander gepreßt werden, beispielsweise durch einen in der Verpackungsmaschine angeordneten Stempel, da ja die Pressung oder Heftung außerhalb des Bereichs des Schachtelkörpers erfolgt. Die außerhalb des Schachtelkörpers gelegene Verbindungsstelle ist für ein Maschinenwerkzeug gut zugänglich.

Nach dem originalen Verschließen können die beiden miteinander verklebten Teile entweder weiterhin vom Schachtelkörper abstehen, z.B. in der Ebene der Schachtelwand oder aber in der Ebene des Seitenteils, oder aber die beiden miteinander verbundenen Teile können maschinell an den Schachtelkörper angelegt werden.

Der vordere Abschnitt des Deckels kann auf der dem Laschenabschnitt zugewandten Seite mit der Originalitätslasche befestigt sein. Bei Ausführungsformen der Erfindung weist jedoch eine der beiden Laschen eine schlitzförmige Aussparung auf, durch die die andere Lasche hindurchgeführt wird. Weist der Deckel im Bereich seines vorderen Falzes eine schlitzförmige Aussparung auf, so ist die Originalitätslasche auf der Außenfläche des Laschenabschnitts befestigt.

Diese Aussparung kann bei einer anderen Ausführungsform der Erfindung auch im Bereich der Verbindungslinie zwischen der Originalitätslasche und der Schachtelwand vorgesehen sein, die dann zum Durchtritt eines am Deckel befestigten Laschenabschnitts vorgesehen ist. Dabei ist sichergestellt, daß die Originalitätslasche abreißbar mit der Schachtelwand verbunden ist.

Bei der erfindungsgemäßen Ausführungsform hat die Aussparung jedoch den Vorteil, daß durch das Hindurchtreten des einen Teils durch den anderen Teil die Außenflächen dieser beiden Teile aufeinander zu liegen kommen. Daher muß der Klebstoff nur auf der Außenfläche des Kartonzuschnitts, aus dem die Faltschachtel gefaltet wird, aufgebracht werden. Bei einer Ausführungsform der Erfindung wird kein normaler Klebstoff auf die Außenfläche des Kartonzuschnitts aufgetragen, sondern ein Lack, der je nach Bedarf so eingestellt sein kann, daß er vor dem Falten der Faltschachtel und vor dem Befüllen der Faltschachtel bereits teilweise ausgehärtet ist, so daß er, wenn die beiden Teile aufeinanderliegen, durch eine Ultraschallvorrichtung oder eine andere Vorrichtung ausgehärtet oder aktiviert werden kann oder aber beim Aufeinanderdrücken der Teile durch einen Stempel die beiden Teile vollständig zusammenkleben kann.

Diese Ausführungsform der erfindungsgemäßen Faltschachtel gewährleistet eine besonders einfache maschinelle Verarbeitung sowohl beim Falten als auch beim Befüllen und Verschließen der Faltschachtel, wobei ein absolut sicherer Schachtelverschluß erzielt wird, der ein unbefugtes Öffnen sofort erkennen läßt und bei dem nach dem Öffnen des Originalitätsverschlusses durch Abreißen der an der unteren Schachtelwand angeordneten Originalitätslasche der mit dieser verbundene, an die Schachtelöffnung überspannenden Deckel befestigte Laschenabschnitt in den Schachtelkörper eingesteckt werden kann.

Damit das Abreißen der Originalitätslasche leicht durchgeführt werden kann, ist diese Lasche bei Ausführungsformen der Erfindung über eine Perforation mit der Schachtelwand verbunden. Diese Perforation kann bei einer Ausführungsform der Erfindung entlang des die Schachtelöffnung begrenzenden Randes der Schachtelwand verlaufen in dem Bereich, in dem die Originalitätslasche mit der Schachtelwand verbunden ist, oder die Originalitätslasche ist über eine Biegelinie mit der Schachtelwand verbunden und in der Schachtelwand ist eine etwa halbkreisförmige Perforation vorgesehen, deren Enden an diesem Rand enden, wobei die Perforation anschließend entweder entlang dieses Randes sich bis zu den Seitenrändern der Lasche erstreckt, oder aber verläuft die halbkreisförmige Perforation so, daß deren Enden an den seitlichen Ränder der Originalitätslasche enden. Eine derartige halbkreisförmige Perforation ist auch unter dem Namen "Daumenperforation " bekannt, sie erleichtert das Abreißen der Originalitätslasche zusätzlich.

Die Biegelinien können als Rill-Linien ausgebildet sein.

Vorzugsweise wird ein Lack oder aber ein Klebstoff verwendet, der durch ein handelsübliches Ultraschallgerät aktiviert wird. Beispielsweise kann die Klebstoffschicht aus einem auf den Schachtelzuschnitt aufgebrachten Dispersionslack bestehen. Eine Verbindung von Originalitätslasche und Laschenabschnitt durch Heftung kann durch Eindrücken von Heftklammern, Nieten oder dergleichen erfolgen.

Der Vorteil einer zunächst auf den Schachtelzuschnitt aufgebrachten, während dem Falten und Befüllen der Schachtel nicht klebenden Klebschicht, die erst beim Verschließen der befüllten Schachtel verklebt wird, liegt darin, daß die Füllmaschine keine Station aufweisen muß, die einen Klebstoff auf den Karton aufbringt. Bei Verwendung eines durch ein Ultraschallgerät aktivierbaren Lackes kann diese Verschweißung wesentlich schneller erfolgen als wenn zunächst Klebstoff auf die Lasche aufgebracht wird und dieser Klebstoff dann erst ausgehärtet werden muß.

Weitere Merkmale der Erfindung ergeben sich aus den Unteransprüchen und der nachfolgenden Beschreibung zweier Ausführungsformen der Erfindung. Die einzelnen Merkmale können je für sich oder zu mehreren bei Ausführungsformen der Erfindung verwirklicht sein.

In der Zeichnung sind zwei Ausführungsformen der Erfindung und das Arbeitsverfahren zum dauerhaften Verschließen der Faltschachtel dargestellt. Dabei zeigen:

Fig. 1 einen Kartonzuschnitt für die Faltschachtel;

Fig. 2 die einzelnen Stationen beim Verschließen der Faltschachtel; und

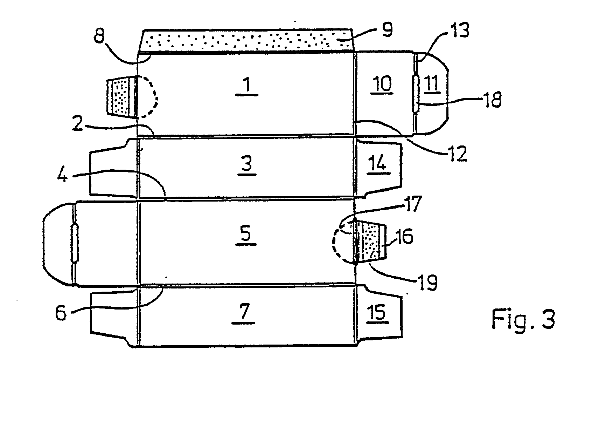

Fig. 3 eine der Fig. 1 entsprechende Darstellung einer anderen Ausführungsform.

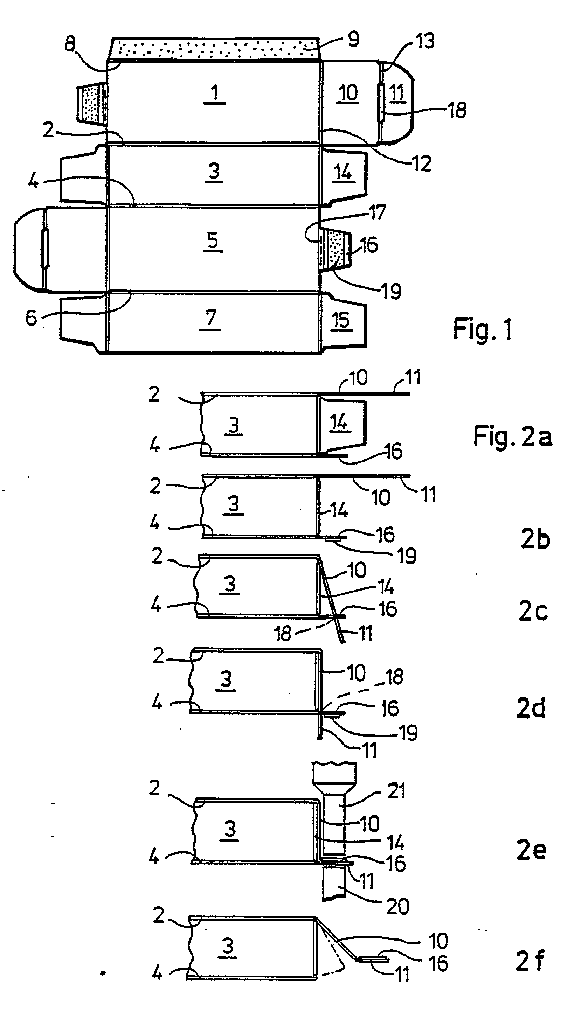

Bei der in der Zeichnung dargestellten Ausführungsform der Erfindung zeigt die Fig. 1 einen Faltschachtelzuschnitt, der, wie üblich einen oberen Teil 1 aufweist, der über einen Falz 2 mit einem Seitenteil 3 und dieser wiederum über einen Falz 4 mit einem Bodenteil 5 verbunden ist, an den sich über einen Falz 6 ein zweites Seitenteil 7 anschließt. Eine über einen Falz 8 an das Oberteil 1 anschließende Lasche 9 wird beim Zusammenfalten an die Innenfläche des Seitenteils 7 angeklebt. Das Oberteil 1 weist am einen seitlichen Rand einen Deckel 10 und einen Laschenabschnitt 11 auf, wobei der dem Oberteil 1 benachbarte Deckel 10 über einen Falz 12 mit dem Oberteil 1 verbunden ist. An dem Oberteil 1 benachbarten Deckel 10 schließt sich über einen Falz 13 der Laschenabschnitt 11 an. An den Seitenteilen 3 und 7 sind durch Falze abgeteilte Laschen 14 und 15 vorgesehen, die beim Schließen der Faltschachtel um 90° nach innen gelegt werden.

Eine Originalitätslasche 16 ist über eine Perforation 17 mit dem Bodenteil 5 verbunden. Diese Originalitätslasche 16 steht bei zusammengefalteter und über die . Lasche 9 verklebter Faltschachtel dem Deckel 10 und dem Laschenabschnitt 11 gegenüber (siehe Fig. 2a). Im Deckel 10 bzw. Laschenabschnitt 11 befindet sich im Bereich des Falzes 13 eine Aussparung 18, deren Maße so gewählt sind, daß die Originalitätslasche 16 beim Herunterklappen des Deckels 10 und des Laschenabschnitts 11 (Fig. 2c) bequem durch die Aussparung 18 hindurchtreten kann. Die Breite dieser schlitzförmigen Aussparung 18 kann 3 bis 5 mm betragen, ihre Länge ist etwas größer als die Originalitätslasche 16 an ihrer Fußlinie breit ist. Auf der dem Laschenabschnitt 11 zugewandten Seite der Originalitätslasche 16 ist eine Schicht 19 aus einem Dispersionslack angeordnet, der bei Behandlung mit Ultraschall aktiv wird.

Auf der in Fig. 1 linken Seite des Zuschnitts sind die gleichen Laschen in umgekehrter Reihenfolge an dem Faltschachtelzuschnitt angeordnet.

Ist der Schachtelkörper durch Ankleben der Lasche 9 an die Innenseite des Seitenteils 7 hergestellt und ist die Schachtel gefüllt, so wird sie gemäß Fig. 2 maschinell geschlossen. Zunächst werden die seitlichen Laschen 14 und 15 um 90° nach innen geführt (Fig. 2a, b). Dann wird der Deckel 10 und der Laschenabschnitt 11 in Fig. 2 nach unten geführt, so daß der Deckel 10 die Schachtelöffnung des Schachtelkörpers überspannt. Dabei tritt die Originalitätslasche 16 durch die Aussparung 18 im Deckel 10 und dem Laschenabschnitt 11 hindurch (Fig. 2c, d).

Nachdem diese Faltvorgänge in der Verpackungsmaschine (Faltmaschine) durchgeführt sind, wird in einer Siegelstation oder Schweißstation mit Hilfe eines Ambosses 20 der Laschenabschnitt 11 an die Originalitätslasche 16 herangeführt. Durch einen Gegenhalter 21, der ein Ultraschallverschweißgerät (Sonotrode) enthält, werden die Laschen 16 und 11 aufeinandergepreßt. Nach dem Einschalten des Ultraschallverschweißgeräts wird die Lackschicht 19 aktiv und die Laschen 11 und 16 werden untrennbar miteinander verschweißt (Fig. 2e). Die Laschen 11 und 16 stehen bei dieser Ausführungsform von dem Schachtelkörper ab. Sie können auch in einem zusätzlichen Arbeitsgang zur Anlage an den Schachtelkörper umgebogen werden.

Soll die so verschlossene Schachtel geöffnet werden, so wird durch Ziehen an den miteinander verschweißten Laschen 11 und 16 die Perforation 17 aufgerissen. Die Originalitätslasche 16 bleibt dann mit dem Laschenabschnitt 11 verbunden, der dann in der üblichen Weise zum Wiederverschließen in Fig. 2f umgebogen und in den Schachtelkörper eingesteckt werden kann.

Anstelle der Perforation 17 kann auch eine Rill-Linie als Biegekante und zum Abreißen eine etwa halbkreisförmige Perforation, eine sogenannte "Daumenperforation", in der Schachtelwand 5 vorgesehen werden. Dies erleichtert das erstmalige Öffnen der Schachtel.

## Patentansprüche

1. Faltschachtel mit einem eine Schachtelöffnung überspannenden Deckel, der über einen ersten Falz mit einer Schachtelwand verbunden ist und an einem zweiten Falz einen Laschenabschnitt aufweist, wobei der Deckel bei original verschlossener Schachtel mit einer Originalitätslasche verbunden ist, die ihrerseits über einen Falz mit einer gegen-über liegenden Schachtelwand verbunden ist, wobei die Originalitätslasche beim erstmaligen Öffnen der Faltschachtel entlang einer Perforation von der unteren Schachtelwand abgetrennt wird, dadurch gekennzeichnet, daß die Originalitätslasche (16) unlösbar mit dem Deckel (10) verbunden ist, daß bei original verschlossener Schachtel der Laschenabschnitt (11) vom Schachtelkörper absteht, und daß der Laschenabschnitt (11) erst nach dem erstmaligen Öffnen der Faltschachtel in die Schachtelöffnung einsteckbar und dadurch die Schachtel erstmalig über den Laschenabschnitt (11) verschließbar ist.

2. Schachtel nach Anspruch 1, dadurch gekennzeichnet, daß im Bereich des zweiten Falzes (13) eine schlitzförmige Aussparung (18) zum Durchtritt der Originaltitätslasche (16) vorgesehen ist.

3. Schachtel nach Anspruch 1, dadurch gekennzeichnet, daß im Bereich des Falzes der Originalitätslasche (16) eine schlitzförmige Aussparung zum Durchtritt des Laschenabschnittes (11) des Deckels (10) vorgesehen ist.

4. Schachtel nach einem der Ansprüche 1 bis 3, dadurch gekennzeichnet, daß die unlösbare Verbindung zwischen dem Deckel (10) und der zusätzlichen Originalitätslasche (16) aus einer Schweißverbindung besteht.

5. Schachtel nach einem der vorhergehenden Ansprüche, dadurch gekennzeichnet, daß die unlösbare Verbindung zwischen dem Deckel (10) und der zusätzlichen Originalitätslasche (16) aus einer Heftung besteht.

6. Schachtel nach einem der vorhergehenden Ansprüche, dadurch gekennzeichnet, daß die Originalitätslasche (16) unlösbar mit dem Laschenabschnitt (11) verbunden ist.

## Claims

1. Folding box with a lid which spans a box opening and is connected to a box wall by means of a first fold and has a flap section at a second fold, the lid being connected to a flap wherein the originality lies when the box is in its original closed state which flap in turn is connected to a box wall opposite by means of a fold, the flap wherein the originality lies being detached along a perforation from the lower box wall when the folding box is opened for the first time, characterized in that, the flap (16) wherein the originality lies is connected to the lid (10) in a nondetachable manner: and in that the flap section (11) projects from the box body when the box is in its original closed state; and in that the flap section (11) can be inserted in the box opening only after the folding box has first been opened and as a result the box can first be closed by means of the flap section (11).

2. Box according to claim 1, characterized in that a slit-shaped recess (18) is provided in the area of the second fold (13) for the passage of the flap (16) wherein the originality lies.

3. Box according to claim 1, characterized in that in the area of the fold of the flap (16) wherein the originality lies, a slit-shaped recess is provided for the passage of the flap section (11) of the lid (10).

4. Box according to one of claims 1 to 3, characterized in that the nondetachable connection between the lid (10) and the additional flap (16) wherein the originality lies comprises a weld joint.

5. Box according to one of the preceding claims, characterized in that the nondetachable connection between the lid (10) and the additional flap (16) wherein the originality lies comprises stitching.

6. Box according to one of the preceding claims, characterized in that the flap (16) wherein the originality lies is connected to the flap section (11) in a nondetachable manner.

## Revendications

1. Boîte pliante comportant un couvercle qui recouvre une ouverture de boîte et qui est relié par un premier pli à une paroi de boîte et présente une section de languette à un second pli, dans laquelle pour une boîte fermée originalement le couvercle est relié à une languette d'origine qui est reliée de son côté par un pli à une paroi opposée de boîte, la languette d'origine étant séparée de la paroi inférieure de boîte le long d'une perforation, lors dela première ouverture de la boîte pliante, caractérisée en ce que la languette d'origine (16) est reliée de façon indissociable au couvercle (10), en ce que pour la boîte fermée originalement la section de languette (11) est éloignée du corps de boîte, et en ce que la section de languette ne peut être insérée dans l'ouverture de boîte qu'après la première ouverture de la boîte pliante et que de cette manière la boîte peut être fermée pour la première fois par la section de languette (11).

2. Boîte suivant la revendication 1, caractérisée en ce que dans la zone du second pli (13) est prévu un évidement en forme de fente (18) pour le passage de la languette d'origine (16).

3. Boîte suivant la revendication 1, caractérisée en ce que dans la zone du pli de la languette d'origine (16) est prévu un évidement en forme de fente pour le passage de la section de languette (11) du couvercle (10).

4. Boîte suivant l'une quelconque des revendications 1 à 3, caractérisée en ce que la liaison indissociable entre le couvercle (10) et la languette d'origine supplémentaire (16) est constituée par une liaison soudée.

5. Boîte suivant l'une quelconque des revendications précédentes, caractérisée en ce que la liaison indissociable entre le couvercle (10) et la languette d'origine supplémentaire (16) est constituée par une agrafe.

6. Boîte suivant l'une quelconque des revendications précédentes, caractérisée en ce que la languette d'origine (16) est reliée de façon indissociable à la section de languette (11).

Fig. 1

Fig. 2a

2b

2c

2d

2e

2f

Fig. 3